# EUROPEAN PATENT APPLICATION

(11) **EP 2 378 807 A1**
(43) Date of publication of application: **19.10.2011**
(21) Application number: 10447012.5
(22) Date of filing: 16.04.2010
(51) Int. Cl.: H04W 28/16, H04L 12/56, H04L 12/24

(54) **Method at a gateway for reserving link capacity on a broadband network**

(71) Applicant: Thomson Telecom Belgium, 2650 Edegem (BE)
(72) Inventor: Yoshizawa, Takahito, 92443 Issy-les-Moulineaux cedex (FR); Skalli, Habiba, 92443 Issy-les-Moulineaux cedex (FR)
(74) Representative: Ruellan-Lemonnier, Brigitte

(57) **Abstract**

The present invention concerns a gateway device connected to a broadband network (5) and to a local network (3), said gateway being adapted to provide a first service to at least a first client located in said local network (3) and a second service to at least a second client located in the local network, said first and second services being transported through the broadband network (5). The gateway device (1) comprises an access control means (15) for reserving a minimum first link capacity on the broadband network for said first service and a minimum second link capacity on the broadband network for said second service, while broadband network link capacity is available, dynamically reserving a first link capacity to said first service and a second link capacity to said second service and if link capacity is required for the second service, and not enough broadband network link capacity is available, releasing some first link capacity reserved above the minimum first link capacity and assigning said released link capacity to said second service.

## Description

### FIELD OF THE INVENTION

The present invention relates generally to broadband gateways and in particular to link capacity reservation on the broadband network.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A broadband gateway is adapted to connect a local area network, noted LAN, to the Internet. It enables devices located in the LAN to access services available on the Internet and transported to the gateway over the Internet Protocol. These services are called broadband services hereinafter. Some example of such services are voice over IP, IPTV, web browsing. More generally access to broadband services is provided by an Internet Service Provider.

A Femtocell access point, noted FAP hereinafter, is a small cellular base station that is usually installed in the indoor environment. It is also called an access point base station or a Home Node B. From a mobile handset, it is functionally similar to a macrocell cellular base station. A FAP aims at providing good in-home radio coverage, possibly relieving some operator's access network resources. A FAP provides about the same kind of services as the macrocell equipments, regarding data services. When installed in a home environment, FAPs use an existing IP access network such as an Asymmetric Digital Subscriber Line, noted ADSL, to connect the equipment to the mobile operator's network. When a mobile equipment connected to a FAP wants to access services provided on an external IP network such as the public Internet, the traffic is routed through the operator's network to an operator's owned "packet gateway" that is connected to the external IP network, providing connectivity to this network, and managing the routing. The procedures to manage the data connections are made transparent to the residential gateways since the signaling and data protocols are transported encapsulated across IP tunnels from the FAP to the operator's serving gateway. Voice communications are also transported to the mobile network over the broadband connection. All services accessed by a mobile handset through the FAP are called hereinafter the mobile services.

Both fixed broadband and 3G cellular service share the DSL link. Cellular services are offered and managed by the Mobile Network Operator (MNO) who owns the appropriate 3G spectrum license. The existing fixed broadband connection, such as ADSL, is provided by a Fixed Network Operator (FNO) and is used as a backhaul to the MNO.

There are two possible deployment scenarios in terms of the relationship between the MNO and FNO. The MNO and FNO may be one and the same; i.e. a combined operator provides both fixed broadband service as well as the mobile system. Or, the MNO and FNO may be two different companies; in this case, femtocell service is offered by the MNO through a third party FNO.

In the first case, the femtocell management, including arranging the xDSL link usage between fixed traffic, such as web browsing, and mobile traffic, such as voice call on the mobile handset, can be done under a single management policy under the operator who owns both types of services.

However, in the latter case, the MNO is dependent on the third party FNO who owns and provides the xDSL service as a backhaul link. In this case, the MNO needs a Service Level Agreement (SLA) to agree on the service quality that the FNO guarantees for the femtocell service. In other words, the MNO requires the FNO to provide a certain guarantee in handling the femtocell traffic between the FAP and to the MNO. From the MNO perspective, the type of agreement in the SLA in order to deploy the femtocell service may comprise among the following: minimum available bandwidth, or link capacity, guaranteed, maximum delay and jitter guaranteed, prioritization of femtocell traffic through the FNO, e.g. using the Differentiated Services Code Point (DSCP) values as defined in IETF RFC 2474. The total available xDSL link capacity is managed in such a way that it can meet the MNO's requirement to provide femtocell service, while, at the same time, FNO can maintain sufficient service to the existing fixed broadband traffic.

In order to provide a minimum guaranteed service, reserving link capacity to any service is needed. The total sum of the used link capacity cannot exceed the total DSL link capacity at any given time. Otherwise, the degradation of the service occurs. Link capacity allocation of a link is static in nature, meaning that the allocated link capacity does not change and does not necessarily reflect the actual usage of the link capacity. It either defines the minimum or maximum link capacity allowed to use for each service. This may lead to an inefficient usage of the DSL link. As long as the fixed broadband and 3G cellular traffic are managed separately, efficient usage of the link capacity can't be achieved. Due to this sharing of single link for two different services, efficient usage of the DSL link is required, while providing sufficient level of quality of service to both services.

### SUMMARY OF THE INVENTION

The present invention attempts to remedy at least some of the concerns connected with link capacity reservation of the prior art, by providing a method at a gateway for dynamically managing link capacity.

To this end, the invention relates to a gateway device connected to a broadband network and to a local network, the gateway being adapted to provide a first service to at least a first client located in the local network and a second service to at least a second client located in the local network, the first and second services being transported through the broadband network.

According to the invention, the gateway comprises an access control means for reserving a minimum first link capacity on the broadband network for the first service and a minimum second link capacity on the broadband network for the second service while broadband network link capacity is available, dynamically reserving a first link capacity to the first service and a second link capacity to the second service and if link capacity is required for the second service, and not enough broadband network link capacity is available, releasing some first link capacity reserved above the minimum first link capacity and assigning the released link capacity to the second service.

Advantageously, the broadband network capacity is dynamically allocated, with the second service having higher priority than the first services. Dynamically means that the capacity is allocated when needed. Minimum capacity is ensured for the first service and the second services, and then the capacity is dynamically reserved. If necessary the first capacity is released to enable the second service to reserve capacity. The capacity allocation of the embodiment enables the FNO to guaranty a Service Level Agreement to the first service provider while optimizing the broadband capacity if the first service doesn't use much capacity.

According to an embodiment the link capacity is reserved for a service according to the number of clients using the service, the amount of traffic, or the type of traffic.

According to an embodiment the gateway comprises an interface to connect a Femtocell Access Point providing cellular services, the second service corresponding to cellular services.

Alternatively, the gateway comprises a Femtocell Access Point provides cellular services, the second service corresponding to cellular services.

According to an embodiment of the invention, the second service is provided by a broadband network operator that manages the broadband network and the first service is provided by a second service operator.

The invention also relates to a method at a gateway device connected to a broadband network and to a local network, the gateway being adapted to provide a first service to at least a first client located in the local network and a second service to at least a second client located in the local network, the first and second services being transported through the broadband network. The method comprises the steps of reserving a minimum first link capacity on the broadband network for the first service and a minimum second link capacity on the broadband network fer the second service, while broadband network link capacity is available, dynamically reserving first link capacity to the first service and second link capacity to the second service and if link capacity is required for the second service, and not enough broadband network link capacity is available, releasing some first link capacity reserved above the minimum first link capacity and assigning the released link capacity to the second service.

Another object of the invention is a computer program product comprising program code instructions for executing the steps of the method according to the invention, when that program is executed on a computer. By "computer program product", it is meant a computer program support, which may consist not only in a storing space containing the program, such as a computer memory, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a block diagram of a system compliant with the embodiment;
- Figure 2 is a block diagram of a device compliant with the embodiment; and
- Figure 3 is a first illustration of the link capacity management; and
- Figure 4 is a second illustration of the link capacity management.

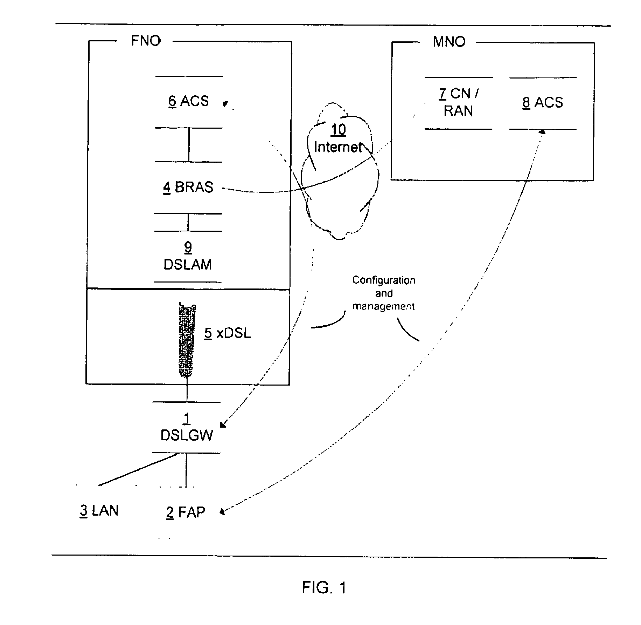

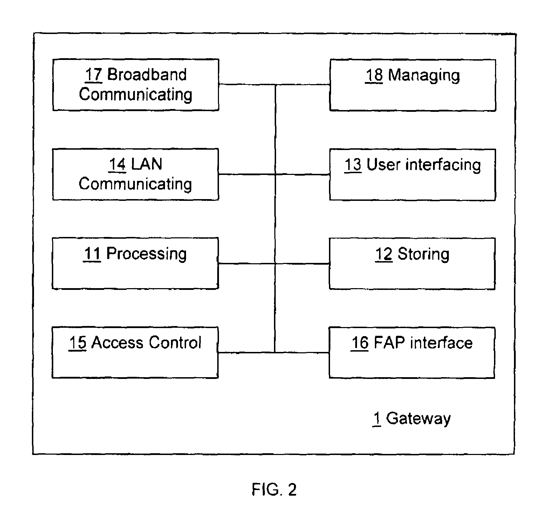

In Figures 1 and 2, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The exemplary embodiment comes within the framework of DSL broadband access, but the invention is not limited to this particular environment and may be applied within other broadband frameworks enabling to connect a femtocell access point. More generally, the invention may be applied to a bandwidth, or link capacity, reservation mechanism over a broadband network in a system offering access to multiple services.

The system of the embodiment is illustrated in figure 1. It comprises a DSL gateway 1, also noted DSLGW, connected to a broadband network through a Digital Subscriber Line Access Multiplexer 9 (DSLAM) and a Broadband Remote Access Server 4 (B-RAS) in a manner well known per se to the skilled in the art. The broadband access and the gateway are managed and controlled by a Fixed Network Operator (FNO). In particular the FNO comprises a management server called an Auto Configuration Server 6 (ACS), and compliant to TR-069 standard on CPE WAN Management Protocol.

The DSLGW is connected to a Femtocell Access Point 2 (FAP) that provides femtocell services to cellular devices not represented, also called User Equipment (UE). The FAP is connected, through the Broadband network, to the Mobile Network Operator (MNO). The FAP is managed and controlled by the MNO in a manner well known per se to the skilled in the art. In particular, the FAP is controlled by an Access Control Server 8 (ACS) located in the mobile operator's core network. Data received at the FAP from the UEs is transported to the mobile network through the broadband network and the Internet 10. The DSLGW is also connected to a local network 3 (LAN). The local network is any type of local network well known to the skilled in the art. It enables to connect LAN clients not represented.

The DSLGW of the embodiment is illustrated in figure 2. It comprises a broadband communicating module 17 for interfacing to the broadband network. It comprises a LAN communicating module 14 for interfacing to the LAN 3. The DSLGW comprises also a processor 11 for processing applications running on the DSLGW. It also comprises storing module 12, such as a memory, for storing applications running on the DSLGW. The DSLGW also comprises a FAP interface 16 to connect to a FAP.

An access control module 15, noted ACM hereinafter, is adapted to perform the link capacity reservation according to the embodiment, as detailed hereinafter. The ACM is adapted to detect applications on the LAN using broadband services. The applications run on devices connected to the LAN or on the DSLGW. The ACM is also adapted to detect User Equipment connected to the FAP. It also evaluates the traffic required to transport broadband services and cellular services over the broadband network, and it reserves link capacity over the DSL.

The User Equipment connected to the FAP use cellular services, comprising Circuit Switch service (such as voice) and Packet Switch service (such as data traffic). The services are transported to the mobile network over the broadband connection. The gateway as well as LAN devices use broadband services transported over the broadband network.

The DSLGW also comprises a management module 18 that enables to configure the DSLGW. In particular the management module 18 is compliant with the TR-069 standard. It is adapted to configure the parameters of the algorithm detailed hereinafter, such as the MIN_BBS, the MIN_CellS, and the priority among the FAPs.

Alternatively, the FAP is not connected to the DSLGW but located in the local network 3. Alternatively, the FAP is embedded into the DSLGW device.

The reservation algorithm is now described. The broadband services are noted BBS, and the cellular services are noted CellS.

When the DSLGW starts, the ACM reserves a minimum link capacity for BBS, noted MIN_BBS. The ACM is adapted to detect when link capacity is required for BBS And, if link capacity is available, it reserves link capacity for BBS.

When a FAP is detected at the FAP interface, the DSLGW reserves a minimum link capacity for the CellS, noted MIN_{_}CellS. Then, the ACM is adapted to detect when link capacity is required for the CellS. And, if link capacity is available, it reserves link capacity for the CellS. If no more link capacity is available, and the link capacity reserved for BBS is above MIN_BBS, the ACM reduces the link capacity reserved for the BBS above MIN_BBS and assigns that link capacity to the CellS.

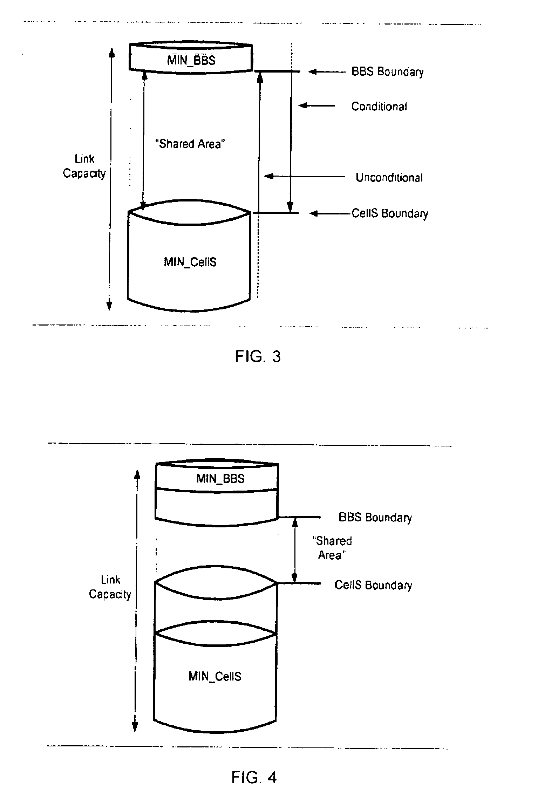

This is illustrated in figures 3 and 4 that show the link capacity split between the BBS, the CellS and a shared area. That shared area can be reserved for the BBS or the CellS. The BBS reservation is conditional in that it is reserved if link capacity is available. The CellS reservation is unconditional in that even if link capacity is not available, but some link capacity has been reserved for the BBS above the MIN_BBS, this can be reduced up to the MlN_BBS, and assigned to the CellS. In figure 3, the link capacity for BBS, BBS boundary, is MIN_BBS and the link capacity for CellS, CellS boundary, is MIN_CellS. In figure 4, the boundaries are above the minima. In other words, the BBS boundary can be reduced to allow link capacity reservation for the CellS. But the CellS boundary is not reduced to allow link capacity reservation for the BBS.

The ACM is adapted to detect when link capacity is required for the CellS. Particularly, the ACM detects the number of User Equipment (UEs), or mobile terminals in more general term, connected to the FAP. Each UE is allocated a link capacity, and the required link capacity for the CellS is then dependent on the number of UEs.

The ACM is controlled and managed by the FNO. According to an agreement between the FNO and the MNO, the FNO sets up the ACM so that it gives priority according to the algorithm of the embodiment, as indicated hereinabove.

The skilled in the art will appreciate that the DSLGW could connect and/or embed more than one FAP. In that case, the DSLGW may prioritize traffic among the FAPs. Each FAP is connected, through the Broadband network, to the MNO. Each FAP is given a MIN_CellS value. If the DSLGW enables to connect more than one FAP, each one managed by a different MNO, the FNO may give the same priority to all FAPs. This is useful if the FNO all have the same service level agreement with the FNO. Alternatively, it may give a different priority to the FAPs to privilege a FAP among the others. This is relevant if FNOs have different service level agreements. An example of two FAPs having different priorities is now described. Two FAPs, FAP1 and FAP2, are connected to the DSLGW. The cellular services for FAP1 and FAP2 are respectively noted CellS1 and CellS2. FAP1 is assigned a priority higher than FAP2. The link capacity is assigned to the BBS, CellS1 and CellS2 in a manner similar to the one indicated hereinabove. The link capacity reserved for BBS is at MIN_BBS. and the link capacity reserved for CellS2 is above MIN_CellS2. If the FAP1 requires link capacity for CellS1, and if no more link capacity is available, the ACM reduces the link capacity reserved for the CellS2 above MIN_CellS2 and assigns that link capacity to the CellS1.

The embodiment is based on a femtocell access point enabling user equipment to access cellular services through the broadband network. Alternatively the dynamic link capacity allocation could be done for other services. For example, the gateway could as well offer dynamic allocation to a video service provider over the broadband network, the video service having a priority higher than the other services.

Alternatively, the dynamic link adaptation could be done for different device types, where services used by said devices would have a priority higher than the other devices.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Gateway device (1) connected to a broadband network (5) and to a local network (3), said gateway being adapted to provide a first service to at least a first client located in said local network (3) and a second service to at least a second client located in the local network, said first and second services being transported through the broadband network (5), said gateway device (1) comprising an access control means (15) for:
- reserving a minimum first link capacity on the broadband network for said first service and a minimum second link capacity on the broadband network for said second service;
- while broadband network link capacity is available, dynamically reserving a first link capacity to said first service and a second link capacity to said second service; and
- if link capacity is required for the second service, and not enough broadband network link capacity is available, releasing some first link capacity reserved above the minimum first link capacity and assigning said released link capacity to said second service.

2. Gateway device according to claim 1, said second service being provided by a broadband network operator that manages said broadband network and said first service being provided by a second service operator.

3. Gateway device according to claim 1 or 2, said link capacity being reserved for a service according to the number of clients using said service, the amount of traffic, or the type of traffic.

4. Gateway device according to any one of the preceding claims, comprising an interface (16) to connect a Femtocell Access Point providing cellular services, said second service being a cellular service.

5. Gateway device according to any one of the preceding claims, comprising a Femtocell Access Point providing cellular services, said second service being a cellular service.

6. Gateway device according to claims 4 or 5, said cellular service being transported encapsulated across tunnels on the broadband network.

7. Gateway device according to any one of claims 4 to 6, the number of clients to said second service corresponding to the number of cellular devices connected to the Femtocell Access Point.

8. Gateway device according to any one of claims 4 to 6, the type of traffic to said second service corresponding to the type of service of cellular devices connected to the Femtocell Access Point.

9. Method at a gateway device (1) connected to a broadband network (5) and to a local network (3), said gateway being adapted to provide a first service to at least a first client located in said local network (3) and a second service to at least a second client located in the local network, said first and second services being transported through the broadband network, said method comprising the steps of:
- reserving a minimum first link capacity on the broadband network for said first service and a minimum second link capacity on the broadband network for said second service;
- while broadband network link capacity is available, dynamically reserving first link capacity to said first service and second link capacity to said second service; and
- if link capacity is required for the second service, and not enough broadband network link capacity is available, releasing some of said first link capacity reserved above the minimum first link capacity and assigning said released link capacity to said second service.

10. Computer program product, **characterized in that** it comprises program code instructions for executing the steps of the method according to claim 9 when said program is executed on a computer.
